# EUROPÄISCHE PATENTANMELDUNG

(11) **EP 1 437 681 A2**
(43) Veröffentlichungstag der Anmeldung: **14.07.2004**
(21) Anmeldenummer: 03090416.3
(22) Anmeldetag: 03.12.2003
(51) Int. Cl.: G06K 19/07, G06K 19/04

(54) **Elektronischer Pfandbeleg und Verfahren für den Verkauf und/oder die Rücknahme von befandetem Leergut, insbesondere von Getränkebehältern**

(30) Priorität: 12.12.2002 DE 10258369
(71) Anmelder: Wincor Nixdorf International GmbH, 33094 Paderborn (DE)
(72) Erfinder: Löning, Johann, 26122 Oldenburg (DE); Hecht, Siegmar, Dr., 98693 Ilmenau (DE)
(74) Vertreter: Seewald, Jürgen, Dipl.-Ing.

(57) **Zusammenfassung**

Die vorliegende Erfindung betrifft einen Pfandbeleg für den Verkauf und/oder die Rücknahme von bepfandetem Leergut, insbesondere von Getränkebehältern. Aufgabe der Erfindung ist es, einen Pfandbeleg und ein Verfahren der eingangs genannten Art zur Verfügung zu stellen, welche das Handling beim Verkauf und bei der Rückgabe von bepfandetem Leergut vereinfachen und verbessern, insbesondere bei der Rücknahme von bepfandeten Einweg-Verpackungen eine Clearing-Stelle zumindest für eine Übergangszeit überflüssig machen. Gelöst wird diese Aufgabe dadurch, dass der Pfandbeleg einen beschreib- und lesbaren elektronischen Datenspeicher aufweist. Gemäß dem erfindungsgemäßen Verfahren weist der Pfandbeleg eine Kennung des Waren-Wirtschaftssystems auf, in welchem Einweg-Verpackungen verkauft werden, wobei der Pfandbeleg beim Verkauf der Einweg-Verpackungen an einen Kunden mit den pfandspezifischen Daten der verkauften Einweg-Verpackungen beschrieben und bei Abgabe von Einweg-Verpackungen durch den Kunden der Pfandbeleg gelesen wird. Bei Identität seiner Kennung mit der Kennung der Annahmestelle wird ein Pfand maximalen in Höhe des Guthabens auf den Pfandbeleg ausgezahlt, wobei bei weniger abgegebenen als gekauften Einweg-Verpackungen ein Guthaben auf dem Pfandbeleg verbleibt und bei mehr abgegebenen als gekauften Einweg-Verpackungen eine Rückgabe der überzähligen Einweg-Verpackungen erfolgt.

## Beschreibung

Die vorliegende Erfindung betrifft einen Pfandbeleg für den Verkauf und/oder die Rücknahme von bepfandetem Leergut sowie ein Verfahren zum Verkauf und zur Rücknahme von bepfandeten Einweg-Verpackungen unter Verwendung dieses Pfandbeleges.

Die Rücknahme von bepfandetem Leergut erfolgt in der heutigen Zeit größtenteils unter Einsatz von Leergut-Rücknahmeautomaten. Eingegebenes Leergut, wie Flaschen und Getränkekästen werden in diesen Automaten von einer Eingabe zu einer Ausgabe transportiert, wo es gesammelt wird. Auf diesem Weg durch den Automaten durchläuft das Leergut eine Identifizierungs-Einheit, in der es detektiert, d. h. nach Art und Menge erfasst wird. Am Ende eines individuellen Eingabevorganges wird in aller Regel ein Pfandbon gedruckt und ausgegeben. Mit diesem Pfandbon begibt sich der Kunde zu einer Kasse, wo eine entsprechende Auszahlung des Pfands erfolgt.

Vereinzelt, insbesondere in kleinen Annahmestellen, erfolgt noch eine manuelle Annahme von Leergut. Dabei wird das abgegebene Leergut von einem Mitarbeiter der Annahmestelle gezählt und dann ebenfalls ein Pfandbon ausgegeben, der an einer Kasse gegen Bargeld eingelöst werden kann.

Derartige Pfandbons müssen, wenn sie nicht gleich eingelöst werden, bei mehrfacher Leergut-Rückgabe gesammelt werden. Dabei besteht die Gefahr, dass sie insgesamt oder zumindest einzelne von ihnen verloren gehen. Zudem müssen an der Kasse bei Abgabe mehrerer Pfandbelege deren Pfandbeträge vor Ausgabe des Pfandgeldes addiert werden. Dieser Vorgang ist, denkt man an die Warteschlangen vor den Kassen, relativ zeitintensiv.

Zukünftig werden auch Einweg-Verpackungen, insbesondere Getränkedosen und Getränke-Plastikflaschen bepfandet. Bei diesen Einweg-Verpackungen ist der Pfandwert wesentlich höher als der materielle Wert des Leerguts. Dies wirft, anders als bei Mehrweg-Verpackungen, wie zum Beispiel Getränke-Glasflaschen, bei denen das Pfand durch den materiellen Wert gedeckt ist, Probleme auf, wenn die Einweg-Verpackungen in einem Warenwirtschaftssystem, zum Beispiel einer Supermarktkette gekauft und in einem anderen Warenwirtschaftssystem abgegeben werden. Im Extremfall wird dann das Pfand von einem Warenwirtschaftssystem einbehalten und von dem anderen Warenwirtschaftssystem ohne Gegenwert ausgezahlt. Um diesen Mangel zu beseitigen, müsste eine sogenannte "Clearing-Stelle" geschaffen werden, die gesamtwirtschaftlich zwischen den einzelnen Warenwirtschaftssystemen für einen Ausgleich des zuviel eingenommenen bzw. des zuviel ausgezahlten Pfands sorgt.

Aufgabe der vorliegenden Erfindung ist es, einen Pfandbeleg und ein Verfahren der eingangs genannten Art zur Verfügung zu stellen, welche das Handling beim Verkauf und bei der Rückgabe von bepfandetem Leergut vereinfachen und verbessern, insbesondere bei der Rücknahme von bepfandeten Einweg-Verpackungen eine Clearing-Stelle zumindest für eine Übergangszeit überflüssig machen.

Gelöst wird diese Aufgabe durch einen Pfandbeleg mit den Merkmalen gemäß Anspruch 1 sowie durch ein Verfahren mit den Merkmalen nach Anspruch 3.

Ein erfindungsgemäßer Pfandbeleg wird den Kunden durch den Handel kostenlos zur Verfügung gestellt. Er kann aber auch bei besonderer Ausgestaltung als Sammlerobjekt verkauft werden. Bei kostenloser zur Verfügungstellung kann er zum Beispiel in einem Leergut-Rücknahmeautomaten bevorratet sein. Er wird nach Eingabe von Leergut an den Kunden ausgegeben, nachdem sein Datenspeicher mit dem gutgeschriebenen Pfand nach Art und Menge des abgegebenen Leerguts beschrieben wurde. Mit dem Pfandbeleg kann der Kunde wie bisher zu einer Kasse gehen. Dort wird der Pfandbeleg in ein Lesegerät eingegeben, der gutgeschriebene Pfandbetrag auf einem Display angezeigt und entsprechend ausgezahlt. Der Kunde kann auf dem Pfandbeleg aber auch Pfand sammeln. Dazu ist der Pfandbeleg bei der nächsten Abgabe von Leergut in eine entsprechende Eingabe eines Leergut-Rücknahmeautomaten einzugeben. Das ermittelte Pfand wird auf dem Datenspeicher des Pfandbelegs kumulativ gutgeschrieben.

Ein erfindungsgemäßer Pfandbeleg kann mehrfach wiederverwendet werden, insbesondere dann, wenn er zum Beispiel die Form einer Karte oder eines sogenannten Coins besitzt. Eine derartige Ausführung des Pfandbelegs verringert im Vergleich mit den bisher üblichen Pfandbelegen in Papierform die Gefahr der Verlierbarkeit und kann darüber hinaus als Werbeträger genutzt werden.

Besonders vorteilhaft ist der Einsatz eines erfindungsgemäßen Pfandbeleges beim Verkauf und bei der Rücknahme von bepfandeten Einweg-Verpackungen, zumindest solange keine sogenannte Clearing-Stelle, wie eingangs kurz erläutert, etabliert worden ist. In diesem Falle ist der Pfandbeleg mit einer Kennung des Warenwirtschaftssystems versehen, in welchem die Einweg-Verpackungen an einen Kunden verkauft werden. Diese Kennung ist vorteilhaft als nicht löschbares Datum auf dem Datenspeicher des Pfandbelegs enthalten. Beim Verkauf von Einweg-Verpackungen an einen Kunden wird der Pfandbeleg in ein Gerät zum Beschreiben seines Datenspeichers eingelegt. Beim Kassieren der gekauften Einweg-Verpackungen an einer Kasse werden die Pfanddaten automatisch auf den Datenspeicher des Pfandbelegs übernommen. Der Datenspeicher enthält damit sozusagen ein Pfandguthaben. Nach dem Kauf der Einweg-Verpackungen wird der Pfandbeleg an den Kunden ausgegeben. Beim späteren Kauf weiterer Einweg-Verpackungen kann der Kunde den gleichen Pfandbeleg vor dem Kassieren an der Kasse vorlegen. Dieser Pfandbeleg wird dann wieder in das Schreibgerät eingelegt, und die Pfanddaten der nunmehr gekauften Einweg-Verpackungen werden kumulativ auf den Datenspeicher übernommen.

Die Kennung auf dem Datenspeicher des Pfandbelegs sichert, dass Pfandgeld nur ausgegeben wird, wenn Einweg-Verpackungen bei einer Annahmestelle abgegeben werden, die zum Warenwirtschaftssystem der Verkaufsstelle gehört. Bei der Abgabe von leeren, bepfandeten Einweg-Verpackungen wird der Pfandbeleg beispielsweise in eine entsprechende Eingabevorrichtung eines Leergut-Rücknahmeautomaten eingegeben. Anschließend erfolgt die Eingabe der Einweg-Verpackungen in den Automaten. Der Automat detektiert und registriert die eingegebenen Einweg-Verpackungen nach Art und Menge und beschreibt den Datenspeicher des Pfandbelegs mit einem den abgegebenen Einweg-Verpackungen entsprechenden Pfandbetrag. Bei mehrfacher, nicht zeitgleicher Abgabe von Einweg-Verpackungen werden die entsprechenden Pfandbeträge auf dem Datenspeicher des Pfandbelegs kumulativ gutgeschrieben. Ein Kunde kann sich dann den gutgeschriebenen Pfandbetrag zu einem beliebigen Zeitpunkt auszahlen lassen, indem er diesen an einer zum Warenwirtschaftssystem gehörenden Kasse vorlegt. An dieser Kasse ist ein Lesegerät vorhanden, in das der Pfandbeleg eingelegt wird. Der gutgeschriebene Pfandbetrag wird auf einem Display für die Verkäuferin und den Kunden angezeigt. Das Pfand kann dann schnell und problemlos ausgezahlt werden.

Werden von einem Kunden weniger Einweg-Verpackungen abgegeben, als seinem Pfandguthaben auf dem Pfandbeleg entspricht, so verbleibt natürlich ein Restguthaben auf dem Pfandbeleg. Gibt der Kunde jedoch mehr Einweg-Verpackungen ab als seinem Pfandguthaben auf dem Pfandbeleg entspricht, so werden die zuviel abgegebenen Einweg-Verpackungen dem Kunden durch den Rücknahmeautomaten retour gegeben. Über diesen Sachverhalt wird er über ein am Automaten vorgesehenes Display informiert.

Auf diese Weise wird sichergestellt, dass einem Warenwirtschaftssystem nicht mehr leere Einweg-Verpackungen wieder zugeführt werden als in diesem Warenwirtschaftssystem gekauft wurden.

Das erfindungsgemäße Verfahren wurde oben stehend anhand einer automatischen Rücknahme von bepfandeten Einweg-Verpackungen beschrieben. Natürlich ist dieses Verfahren auch bei manueller Annahme von leeren Einweg-Verpackungen möglich. In diesem Falle muss an der Annahmestelle ein entsprechendes Schreib- und Lesegerät für die Pfandbelege vorhanden sein. Die pfandspezifischen Daten können dann zum Beispiel über das Einscannen mit einem Handscanner auf den Datenspeicher des Pfandbelegs übertragen werden.

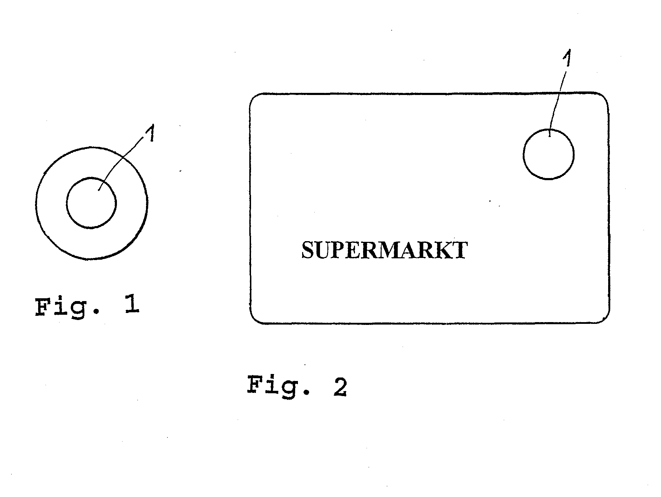

In den Fig. 1 und 2 sind zwei Beispiele für einen erfindungsgemäßen Pfandbeleg dargestellt.

Der in Fig. 1 gezeigte Pfandbeleg hat die Form eines Coins, also eines Geldstücks. Er ist aus einem Kunststoffmaterial gefertigt und weist in seiner Mitte einen integrierten Datenspeicher 1 auf. Aufgrund seiner Münzenform kann dieser Pfandbeleg im Hartgeldfach eines Portemonnais sicher aufbewahrt werden.

Der in Fig. 2 gezeigte Pfandbeleg hat Scheckkarten-Format. Er ist aus einem Kunststoffmaterial gefertigt und besitzt ebenfalls einen integrierten Datenspeicher 1. Die nicht von dem Datenspeicher 1 belegte Fläche des Pfandbelegs kann, wie angedeutet, für Werbezwecke genutzt werden. Das trifft auch für den in Fig. 1 dargestellten Pfandbeleg zu.

## Patentansprüche

1. Pfandbeleg für den Verkauf und/oder die Rücknahme von bepfandetem Leergut, insbesondere von Getränkebehältern, **dadurch gekennzeichnet, dass** er einen beschreib- und lesbaren elektronischen Datenspeicher (1) aufweist.

2. Pfandbeleg nach Anspruch 1, **dadurch gekennzeichnet, dass** er die Form einer Münze oder einer Karte hat und aus einem Kunststoffmaterial gefertigt ist.

3. Verfahren zum Verkauf und zur Rücknahme von bepfandeten Einweg-Verpackungen, insbesondere von Getränkebehältern, unter Verwendung des Pfandbelegs nach Anspruch 1 oder Anspruch 2, **dadurch gekennzeichnet, dass** der Pfandbeleg eine Kennung des Warenwirtschaftssystems aufweist, in welchem die Einweg-Verpackungen verkauft werden, und dass der Pfandbeleg beim Verkauf der Einweg-Verpackungen an einen Kunden mit den pfandspezifischen Daten der verkauften Einweg-Verpackungen beschrieben wird, und dass bei Abgabe von Einweg-Verpackungen durch den Kunden der Pfandbeleg gelesen wird und bei Identität seiner Kennung mit der Kennung der Annahmestelle ein Pfand maximal in Höhe des Guthabens auf dem Pfandbeleg ausgezahlt wird, wobei bei weniger abgegebenen als gekauften Einweg-Verpackungen ein Guthaben auf dem Pfandbeleg verbleibt und bei mehr abgegebenen als gekauften Einweg-Verpackungen eine Rückgabe der überzähligen Einweg-Verpackungen erfolgt.
